# EUROPEAN PATENT SPECIFICATION

(11) **EP 3 636 408 B1**
(45) Date of publication and mention of the grant of the patent: **19.07.2023**
(21) Application number: 18814254.1
(22) Date of filing: 31.05.2018
(51) Int. Cl.: B29C 45/14, B29C 67/24, B29C 45/26, B29C 45/73, B29C 45/74, B29C 45/78, B29K 27/18

(54) **METHOD FOR MANUFACTURING JOINED ARTICLE**
VERFAHREN ZUR HERSTELLUNG EINES VERBUNDARTIKELS
PROCÉDÉ DE FABRICATION D'ARTICLE ASSEMBLÉ

(30) Priority: 05.06.2017 JP 2017110810
(43) Date of publication of application: 15.04.2020
(73) Proprietor: AGC Inc., Chiyoda-ku Tokyo 100-8405 (JP)
(72) Inventor: AIDA, Shigeru, Tokyo 100-8405 (JP); SATO, Takashi, Tokyo 100-8405 (JP)
(74) Representative: Müller-Boré & Partner Patentanwälte PartG mbB
(86) International application number: PCT/JP2018/021020
(87) International publication number: WO 2018/225622

(56) References cited:
- WO-A2-99/25425
- JP-A- H09 300 394
- JP-A- 2003 160 254
- JP-A- 2003 160 254
- JP-A- 2007 185 822
- JP-A- 2015 157 475
- JP-A- 2015 190 492
- US-A1- 2003 236 353
- US-A1- 2009 152 746
- US-A1- 2011 293 925
- US-A1- 2014 342 155
- US-A1- 2017 066 915
- US-B1- 6 479 161

## Description

The present invention relates to a method for producing a bonded article in which a member containing a fluorinated polymer and another member are bonded.

A fluorinated polymer such as polytetrafluoroethylene, a tetrafluoroethylene/perfluoro(alkyl vinyl ether) copolymer, an ethylene/tetrafluoroethylene copolymer or the like, is excellent in chemical resistance, heat resistance, weather resistance, low friction, electrical insulating properties, etc. and thus is used as a material for various members (tubes, hoses, films, coating layers for electric wires, etc.) to be exposed to severe conditions in semiconductor manufacturing apparatus, aircrafts, automobiles, etc.

A member containing a fluorinated polymer may be used in a state of being bonded to a member made of another material (a resin material other than a fluorinated polymer, a metal material, etc.). For example, in a case of providing a connector to an end portion of an electric wire having a coating layer containing a fluorinated polymer, it is necessary to bond the coating layer of the electric wire and a resin housing of the connector.

However, since the fluorinated polymer is poor in adhesion to another material, it is difficult to firmly bond the member containing the fluorinated polymer and a member made of another material.

Although not a bonded article having two or more members bonded, as a laminate in which a layer containing a fluorinated polymer and a layer containing another resin material are firmly bonded, for example, the following ones have been proposed.
(1) A laminate in which a layer made of a fluororesin having a functional group and a layer made of a thermoplastic resin having a functional group reactive with the functional group of the fluororesin, are directly bonded, wherein the melting point of the fluororesin is from 120 to 230°C (Patent Document 1).
(2) A laminate having a layer made of a modified polyolefin having an imino group or a carbodiimide group, and a layer made of a fluororesin having an adhesive functional group reactive with the imino group or the carbodiimide group (Patent Document 2).
(3) A laminate in which a layer composed mainly of a fluorinated copolymer with a melting point of at most 220°C, and a layer composed mainly of a thermoplastic nonfluorinated elastomer or a thermoplastic non-fluororesin with a melting point of at most 260°C, are laminated via a layer composed mainly of an epoxy group-containing ethylene type copolymer having a melting point of at most 240°C, or a layer composed mainly of a polyamide type elastomer or resin having a melting point of at most 240°C (Patent Document 3). Patent Document 4 discloses a golf ball comprising fluoropolymer and method of making same. Patent Document 5 describes golf balls comprising non-ionomeric fluoropolymer. Patent Document 6 discloses a fluorocarbon resin multilayer laminate. Patent Document 7 discloses a fluorine-containing adhesive and adhesive film and laminated article made by using the same. Patent Document 8 describes a recording paper conveying roller and its manufacturing method. Patent Document 9 discloses a multi-stage injection over-molding system with intermediate support and method of use. Patent Document 10 describes a fluorinated copolymer composition, molded product and electric wire. Patent Document 11 discloses a fluorinated resin composition. Patent Document 12 describes a system, method and apparatus for polymer seals to form positive shut-off for insert molding of liquid silicone rubber.

Patent Document 1: WO 2006/134764
Patent Document 2: JP-A-2012-106494
Patent Document 3: JP-A-2016-049764
Patent Document 4: WO 99/25425 A2
Patent Document 5: US 2003/236353 A1
Patent Document 6: JP 2007/185822 A
Patent Document 7: US 6 479 161 B1
Patent Document 8: JP 2003/160254 A
Patent Document 9: US 2009/152746 A1
Patent Document 10: US 2014/342155 A1
Patent Document 11: US 2017/066915 A1
Patent Document 12: US 2011/293925 A1

In the above laminates (1) to (3), for example, by coextruding the fluorinated polymer and another resin material, the respective layers are strongly bonded to each other. However, such a co-extrusion method cannot be applied to the production of a bonded article, in which to a preliminarily prepared member containing a fluorinated polymer, a member containing another resin material is bonded.

It is an object of the present invention to provide a method whereby it is possible to easily produce a bonded article in which a member containing a fluorinated polymer and another member are firmly bonded.

The present inventors have conducted intensive studies to achieve the above object, and as a result, they have found it possible to obtain a bonded article in which a member containing a fluorinated polymer and a member containing a resin material are firmly bonded, by disposing the member containing a fluorinated polymer having an adhesive functional group in the cavity of a mold for injection molding, and injecting the resin material in a molten state into the cavity, and thus have arrived at completion of the present invention.

The present invention has the following embodiments.
<1> A method for producing a bonded article in which a member A containing a fluorinated polymer having an adhesive functional group and a member B containing a resin material, are bonded, characterized in that in a state where at least a portion of said member A is disposed in the cavity of a mold for injection molding, said resin material is injected into the cavity and solidified to form said member B, wherein the adhesive functional group is a carbonyl group-containing group, the resin material contained in the member B is a polyamide, and the temperature of the mold is lower by at least 10°C than the melting point of the fluorinated polymer.
<2> The method for producing a bonded article according to <1>, wherein in a state where at least a portion of said member A and at least a portion of a member C other than said member A and said member B, are disposed in the cavity of the mold, said resin material is injected into the cavity.
<3> The method for producing a bonded article according to <1> or <2>, wherein the fluorinated polymer has units derived from ethylene and units derived from tetrafluoroethylene.
<4> The method for producing a bonded article according to <3>, wherein the molar ratio of the units derived from ethylene to the units derived from tetrafluoroethylene is from 25/75 to 80/20.
<57> The method for producing a bonded article according to any one of <1 > to <4>, wherein the melting point of the fluorinated polymer is at most 320°C.
<6> The method for producing a bonded article according to any one of <1 > to <5>, wherein said resin material is a thermoplastic resin or a thermosetting resin.
<7> The method for producing a bonded article according to any one of <1> to <6>, wherein said resin material has a functional group reactive with said adhesive functional group.
<8> The method for producing a bonded article according to any one of <1 > to <7>, wherein the pressure dwell time after injecting the resin material into the cavity of the mold is from 0.5 to 100 seconds.
<9> The method for producing a bonded article according to any one of <1 > to <8>, wherein the holding pressure after injecting the resin material into the cavity of the mold is from 1 to 50 MPa.
<10> The method for producing a bonded article according to any one of <1> to <9>, wherein the injection speed at the time of injecting the resin material into the cavity of the mold is from 10 to 500 mm/s.

According to the method for producing a bonded article of the present invention, it is possible to easily produce a bonded article in which a member containing a fluorinated polymer and another member are firmly bonded. In particular, according to the production method of the present invention, it is possible to easily produce a bonded article in which the members are firmly bonded to each other, even without a step of e.g. bonding via an adhesive layer or bonding upon treating the surfaces of the respective members.
Fig. 1 is a schematic external view showing an example of a bonded article (a connector-attached electric wire).
Fig. 2 is a schematic cross-sectional view showing an example of a state where a portion of a member A and a portion of a member C are disposed in the cavity of a mold for injection molding.

In this specification, the meanings of the following terms are as follows.

A "unit" in a polymer means an atomic group derived from one molecule of a monomer, formed by polymerization of the monomer. A unit may be an atomic group that is directly formed by a polymerization reaction of a monomer, or may be a unit in which a part of the unit is converted to another structure by treating the polymer. A unit derived from a monomer may also be referred to simply as a monomer unit.

An "acid anhydride group" means a group represented by -C(=O)-O-C(=O)-.

The "pressure dwell" means applying a pressure not to let a molten resin flow back after the molten resin is filled into the cavity of the mold, or to stabilize the dimension of the molded article.

The expression " to " showing a numerical range is meant to include the numerical values given before and after the expression as the lower limit value and the upper limit value.

### <Bonded article>

The bonded article to be produced in the present invention comprises a member A containing a fluorinated polymer having an adhesive functional group, and a member B containing a resin material, bonded to the member A.

As the case requires, the bonded article may further have at least one member C other than the member A and the member B, bonded to either one or both of the member A and the member B.

### (Member A)

The member A contains a fluorinated polymer having an adhesive functional group, the adhesive functional group being a carbonyl group-containing group (hereinafter referred to also as a fluorinated polymer X). As the case requires, the member A may contain a resin material other than the fluorinated polymer X, additives, etc. to an extent not to impair the effects of the present invention.

As the member A, various molded articles (a tube, a hose, a film, etc.), a coating layer of an electric wire, a sheath layer, a housing of an electrical device, a seal ring, etc. may be mentioned.

The fluorinated polymer X having an adhesive functional group (hereinafter referred to also as a functional group I), has units derived from a fluorinated monomer.

From such a viewpoint that it is easy to control the content of the functional group I, and it is easy to produce a fluorinated polymer X with high adhesiveness, it is preferred that the fluorinated polymer X has units (hereinafter referred to also as FM units) derived from a monomer having a functional group I (hereinafter referred to also as FM). Here, the number of functional groups I present in FM may be one or may be plural. Further, in a case where there exist a plurality, the types of the respective functional groups may be different.

As the case requires, the fluorinated polymer X may have units derived from monomers (hereinafter referred to also as other monomers) other than the fluorinated monomer and FM.

As the functional group I, from the viewpoint of excellent adhesion between the fluorinated polymer X and another material, the functional group I is a carbonyl group-containing group. As the carbonyl group-containing group, an acid anhydride group or a carboxy group is preferred.

The fluorinated monomer may be a monomer having a fluorine atom and a polymerizable carbon-carbon double bond. As the fluorinated monomer, the following monomers m1 to m7 may be mentioned.

Monomer m1: tetrafluoroethylene (hereinafter referred to also as TFE), chlorotrifluoroethylene (hereinafter referred to also as CTFE).

Monomer m2: a compound represented by CH₂=CX(CF₂)ₙY (wherein X and Y are each independently a hydrogen atom or a fluorine atom, n is an integer of from 2 to 8) (hereinafter referred to also as FAE).

Monomer m3: a fluoroolefin having a hydrogen atom in an unsaturated group, such as vinylidene fluoride, vinyl fluoride, trifluoroethylene, hexafluoroisobutylene, etc.

Monomer m4: a fluoroolefin having no hydrogen atom in an unsaturated group, such as hexafluoropropylene (hereinafter referred to also as HFP), etc. (but excluding TFE and CTFE).

Monomer m5: a perfluoro(alkyl vinyl ether), such as perfluoro(methyl vinyl ether), perfluoro(ethyl vinyl ether), perfluoro(propyl vinyl ether), perfluoro(butyl vinyl ether), etc.

Monomer m6: a perfluorovinyl ether having two unsaturated bonds, such as CF₂=CFOCF₂CF=CF₂, CF₂=CFO(CF₂)₂CF=CF₂, etc.

Monomer m7: a fluorinated monomer having an aliphatic cyclic structure, such as perfluoro(2,2-dimethyl-1,3-dioxole), 2,2,4-trifluoro-5-trifluoromethoxy-1,3-dioxole, perfluoro(2-methylene-4-methyl-1,3-dioxolane), etc.

As the fluorinated monomer, one type may be used alone, or two or more types may be used in combination.

As the fluorinated monomer, from the viewpoint of excellent heat resistance, chemical resistance, weather resistance and non-tackiness of the member A, the monomer m1 is preferred, and TFE is particularly preferred.

As the fluorinated monomer, from the viewpoint of excellent heat resistance, chemical resistance, weather resistance and non-tackiness of the member A, a combination of the monomer m1 and at least any one of the monomer m2 to the monomer m7, is preferred, a combination of the monomer m1 and at least any one of the monomer m2, the monomer m4 and the monomer m5, is more preferred, and a combination of the monomer m1 and either one or both of the monomer m4 and the monomer m5, is particularly preferred.

In FAE of the monomer m2, n is from 2 to 8, preferably from 2 to 6, more preferably from 2 to 4. When n is at least the lower limit value in the above range, the characteristics (the heat resistance, chemical resistance, weather resistance, non-tackiness, stress cracking resistance, etc.) of the member A made of ETFE to be described later, will be excellent. When n is at most the upper limit value in the above range, the polymerizability of FAE will be excellent.

FAE may be CH₂=CF(CF₂)₂F, CH₂=CF(CF₂)₃F, CH₂=CF(CF₂)₄F, CH₂=CF(CF₂)₅F, CH₂=CF(CF₂)₈F, CH₂=CF(CF₂)₂H, CH₂=CF(CF₂)₃H, CH₂=CF(CF₂)₄H, CH₂=CF(CF₂)₅H, CH₂=CF(CF₂)₈H, CH₂=CH(CF₂)₂F, CH₂=CH(CF₂)3F, CH₂=CH(CF₂)₄F, CH₂=CH(CF₂)₅F, CH₂=CH(CF₂)₆F, CH₂=CH(CF₂)₈F, CH₂=CH(CF₂)₂H, CH₂=CH(CF₂)₃H, CH₂=CH(CF₂)₄H, CH₂=CH(CF₂)₅H, CH₂=CH(CF₂)₈H, etc. As FAE, one type may be used alone, or two or more types may be used in combination.

As FM, a monomer having a carbonyl group-containing group is used. As the monomer having a carbonyl group-containing group, a monomer having a carboxy group or a monomer having an acid anhydride group is preferred.

The monomer having a carboxy group may be maleic acid, itaconic acid, citraconic acid, undecylenic acid, etc.

The monomer having an acid anhydride group may be itaconic anhydride, citraconic anhydride, 5-norbornene-2,3-dicarboxylic anhydride, maleic anhydride, etc.

The monomer having a hydroxy group may be a hydroxyalkyl vinyl ether, etc.

The monomer having an epoxy group may be an epoxy alkyl vinyl ether, etc.

As FM, one type may be used alone, or two or more types may be used in combination.

In a case where the fluorinated polymer X has FM units, the proportion of FM units is preferably from 0.01 to 5 mol%, more preferably from 0.03 to 3 mol%, further preferably from 0.05 to 1 mol%, in all units (100 mol%). When the proportion FM units is within the above range, the chemical resistance and heat resistance of the member A will be further excellent, and at the same time, the adhesion between the fluorinated polymer X and another material will be further excellent.

Other monomers may be a vinyl ether (methyl vinyl ether, ethyl vinyl ether, butyl vinyl ether, tert-butyl vinyl ether, methoxyethyl vinyl ether, ethoxyethyl vinyl ether, etc.), α-olefin (ethylene, propylene, butene, isobutene, etc.), etc. As other monomers, one type may be used alone, or two or more types may be used in combination.

As other monomers, from the viewpoint of excellent physical properties such as heat resistance, mechanical properties, etc. of the member A, ethylene, propylene or 1-butene is preferred, and ethylene is particularly preferred.

As the fluorinated polymer X, from the viewpoint of excellent balance in chemical resistance, heat resistance, mechanical properties, etc. of the member A, preferred is a polymer (hereinafter referred to also as ETFE-X) having a functional group I and also having units derived from ethylene (hereinafter referred to as E units) and units derived from TFE.

ETFE-X preferably has FM units, from such a viewpoint that it will be easy to control the content of the functional group I, and it will be easy to produce ETFE-X with high adhesiveness.

ETFE-X preferably further has FAE units, from such a viewpoint that the characteristics such as stress crack resistance, mechanical strength, etc. of the member A will be further excellent.

ETFE-X may have HFP units, from such a viewpoint that it will be easy to control the melting point of the fluorinated polymer to be within a suitable range without lowering the heat resistance of the member A.

As ETFE-X, the following copolymers are preferred.

A copolymer consisting of TFE units/E units/FM units,
a copolymer consisting of TFE units/E units/FM units/HFP units,
a copolymer consisting of TFE units/E units/FM units/propylene units,
a copolymer consisting of TFE units/E units/FM units/FAE units,
a copolymer consisting of TFE units/E units/ FM units/FAE units/propylene units,
a copolymer consisting of TFE units/E units/FM units/HFP units/FAE units.

The molar ratio of TFE units to E units in ETFE-X (TFE units/E units) is preferably from 25/75 to 80/20, more preferably from 40/60 to 65135, further preferably from 42/58 to 63/37, particularly preferably from 45/ 55 to 61/39. When the molar ratio is at most the upper limit value in the above range, the mechanical strength of the member A will be further excellent. When the molar ratio is at least the lower limit value in the above range, the heat resistance of the member A will be further excellent.

In a case where ETFE-X has FAE units, the proportion of FAE units is preferably from 0.01 to 20 mol%, more preferably from 0.1 to 15 mol%, particularly preferably from 0.2 to 5 mol%, in all units (100 mol%). When the proportion is at least the lower limit value in the above range, the stress crack resistance of the member A will be excellent, and a breakdown phenomenon such as cracking is unlikely to occur under stress. When the proportion is at most the upper limit value in the above range, the mechanical strength of the member A will be excellent.

In a case where ETFE-X has HFP units, the proportion of HFP units is preferably from 0.01 to 20 mol%, more preferably from 0.1 to 15 mol%, particularly preferably from 0.2 to 10 mol%, in all units (100 mol%).

In a case where ETFE-X has FM units, the proportion of FM units is preferably from 0.01 to 5 mol%, more preferably from 0.03 to 3 mol%, further preferably from 0.05 to 1 mol%, in all units (100 mol%).

In a case where ETFE-X has propylene units, the proportion of propylene units is preferably from 0.01 to 25 mol%, more preferably from 0.1 to 22 mol%, further preferably from 0.2 to 16 mol%, in all units (100 mol%).

The melting point of the fluorinated polymer X is preferably at most 320°C, more preferably at most 300°C, further preferably at most 280°C. When the above melting point is at most the upper limit value in the above range, the member A and the member B will be further firmly bonded. The above melting point is preferably at least 120°C, more preferably at least 160°C. When the above melting point is at least the lower limit value in the above range, the heat resistance of the member A will be further excellent.

The melting point of the fluorinated polymer X may be controlled by adjusting, for example, the proportions of E units, HFP units and FAE units.

The fluorinated polymer X is preferably one in which at a temperature higher by from 20 to 50°C than the melting point of the fluorinated polymer X, there is a temperature at which the volume flow rate (hereinafter referred to also as the Q value) becomes to be from 0.1 to 1,000 mm³/sec., more preferably one in which there is a temperature at which the Q value becomes to be from 0.1 to 500 mm³/sec., further preferably one in which there is a temperature at which the Q value becomes to be from 1 to 200 mm³/sec., particularly preferably one in which there is a temperature at which the Q value becomes to be from 5 to 100 mm³/sec. The Q value is measured by the method as described below, and is an index showing the melt flowability of the fluorinated polymer X, and thus is an index for the molecular weight. The Q value being large indicates that the molecular weight is low, and it being small indicates that the molecular weight is high.

When the Q value is at least the lower limit value in the above range, the fluorinated polymer X will be excellent in moldability. When the Q value is at most the upper limit value in the above range, the member A and the member B will be further firmly bonded.

As the method of producing a fluorinated polymer X, for example, the following method i to method iv may be mentioned, and from such a viewpoint that it will be easy to control the content of the functional group I, and it will be easy to produce a fluorinated polymer X with high adhesiveness, the method i is preferred.

Method i: a method of polymerizing monomer components containing a fluorinated monomer and FM.

Method ii: a method of polymerizing a monomer component containing a fluorinated monomer in the presence of a polymerization initiator having a functional group I, or a chain transfer agent having a functional group I.

Method iii: a method of kneading FM and a fluorinated polymer, followed by irradiation of a radiation.

Method iv: a method of kneading FM, a fluorinated polymer and a polymerization initiator, followed by melt extrusion to graft polymerize FM to the fluorinated polymer.

The polymerization initiator having a functional group I is preferably a peroxide type initiator such as a peroxycarbonate, a diacyl peroxide, a peroxy ester, etc. Specifically, di-n-propyl peroxydicarbonate, diisopropyl peroxydicarbonate, tert-butylperoxy isopropyl carbonate, bis(4-tert-butylcyclohexyl) peroxydicarbonate, di-2-ethylhexyl peroxydicarbonate, tert-butyl peroxypivalate, etc. may be mentioned.

The chain transfer agent having a functional group I is preferably a chain transfer agent having a carboxy group, an ester bond, a hydroxyl group, etc., and specifically, acetic acid, acetic anhydride, methyl acetate, ethylene glycol, propylene glycol, etc. may be mentioned.

The method i may be a method in which a fluorinated monomer, FM and optionally other monomers are charged in a reactor and polymerized by using a polymerization initiator, and, for example, the polymerization method as described in Patent Document 1 may be mentioned.

The polymerization method may be a known bulk polymerization method; a solution polymerization method using a suitable organic solvent such as a fluorinated hydrocarbon, a chlorinated hydrocarbon, a fluoro-chlorinated hydrocarbon, an alcohol, a hydrocarbon, etc.; a suspension polymerization method using an aqueous medium and optionally a suitable organic solvent; an emulsion polymerization method using an aqueous medium and an emulsifier; etc., and the solution polymerization method is preferred. The polymerization can be carried out by a batch system or a continuous system by using one-tank or multi-tank type stirring type polymerization apparatus, a tubular polymerization apparatus, or the like.

Other resin materials which the member A may contain, may be an aromatic polyester, a polyamide-imide, a thermoplastic polyimide, etc.

The additives which the members A may contain, may be an inorganic filler, a pigment, a thermal stabilizer, a UV absorber, carbon, an impact modifier, a nucleating agent, an extrusion aid, etc.

As the inorganic filler, an inorganic filler having a low dielectric constant or dielectric loss tangent, is preferred. The inorganic filler may be silica, clay, talc, calcium carbonate, mica, diatomaceous earth, alumina, zinc oxide, titanium oxide, calcium oxide, magnesium oxide, iron oxide, tin oxide, antimony oxide, calcium hydroxide, magnesium hydroxide, aluminum hydroxide, basic magnesium carbonate, magnesium carbonate, zinc carbonate, barium carbonate, dawsonite, hydrotalcite, calcium sulfate, barium sulfate, calcium silicate, montmorillonite, bentonite, activated clay, sepiolite, imogolite, sericite, glass fiber, glass beads, silica-based balloons, carbon black, carbon nanotube, carbon nanohorn, graphite, carbon fiber, glass balloon, carbon burn, wood flour, zinc borate, etc. As the inorganic filler, one type may be used alone, or two or more types may be used in combination.

### (Member B)

The member B contains a resin material, the resin material being a polyamide (hereinafter referred to also as a resin material Y).

The member B may contain additives, etc. as the case requires.

As the member B, various molded products (a housing for electrical components or electronic components, a housing for a connector, a joint for a sleeve, a tube or a hose, etc.) may be mentioned.

The member B is a member to be formed by injecting and solidifying the resin material Y in a cavity of a mold for injection molding in a state where at least a portion of the member A is disposed in the cavity in the after-described production method of the present invention, and in this respect, it is distinct from the member C.

The resin material may contain various elastomer components.

The resin material Y is a polyamide, since it can be easily used for the above-mentioned various molded products, particularly for a housing for a connector. In particular, an aromatic polyamide such as polyamide 9T or polyamide 10T, polyamide 66, polyamide 6, polyamide 11, polyamide 12, or polyamide 612, is preferred. More preferred is polyamide 9T, polyamide 6, or polyamide 66.

The resin material Y preferably has a functional group (hereinafter referred to also as a "functional group II") reactive with the functional group I of the fluorinated polymer X, from such a viewpoint that the member A and the member B will be more firmly bonded.

As the functional group II, the following groups may be mentioned.

In a case where the functional group I is a carbonyl group-containing group: a hydroxy group, an epoxy group, an amide group, an amino group, an isocyanate group, an imino group, a carbodiimide group, etc.

The additives which the member B may contain, may be an inorganic filler, a pigment, a thermal stabilizer, a UV absorber, carbon, an impact modifier, a nucleating agent, an extrusion aid, an antioxidant, etc.

### (Member C)

The member C is a member other than the member A and the member B.

The member C may be a member made of a metal material, a member containing a resin material (but excluding the member B), a member made of ceramics, etc.

The member made of a metal material may be a core wire for an electric wire, a terminal, various fittings, etc.

### <Method for producing bonded article>

The method for producing a bonded article of the present invention is a method in which in a state where at least a portion of the member A is disposed in the cavity of a mold for injection molding, a molten resin material Y is injected into the cavity and solidified to form a member B.

In the present invention, the molten resin material may be injected into the cavity in a state where at least a portion of the member A and at least a portion of the member C, are disposed in the cavity of the mold.

### (injection molding conditions)

In a case where the resin material Y is a thermoplastic resin, the temperature of the mold must be lower than the melting point of the resin material Y, from the viewpoint of solidifying the resin material Y

The temperature of the mold is lower by at least 10°C, preferably at least 20°C, further preferably at least 40°C, than the melting point of the fluorinated polymer X. When the temperature of the mold is at most the upper limit value in the above range, deformation of the member A in contact with the mold and the member A disposed in the cavity of the mold can be suppressed.

The temperature of the mold is preferably at least 80°C from such a viewpoint that the surface appearance of the molded product will be good, and the adhesion of the member A and the member B will be high.

The time for maintaining the holding pressure after injecting the resin material Y into the cavity of the mold (hereinafter referred to also as the pressure dwell time) is preferably from 0.5 to 100 seconds, more preferably from 0.7 to 50 seconds, further preferably from 1 to 30 seconds. When the pressure dwell time is set after injecting the resin material Y in a molten state, a pressure is applied to the interface between the fluorinated polymer X and the resin material Y, whereby good adhesion will be obtained. When the pressure dwell time is at least the lower limit value in the above range, adhesion between the fluorinated polymer X and the resin material Y will be sufficient. When the pressure dwell time is at most the upper limit value in the above range, the productivity will be good.

The pressure (hereinafter referred to also as the holding pressure) applied at the time of the pressure dwell after injecting the resin material Y into the cavity of the mold, is preferably from 1 to 50 MPa, more preferably from 2 to 40 MPa, further preferably from 5 to 30 MPa. When the holding pressure is at least the lower limit value in the above range, the adhesive strength of the fluorinated polymer X and the resin material Y will be sufficient. When the holding pressure is at most the upper limit value in the above range, there will be no need to apply pressure more than necessary, a deformation of the member A will be suppressed, and also the cost for the injection molding apparatus will not be high.

The injection speed at the time of injecting the resin material Y into the cavity of the mold is preferably from 10 to 500 mm/s, more preferably from 30 to 400 mm/s, further preferably from 50 to 300 mm/s. When the injection speed is at least the lower limit value in the above range, a decrease in adhesive strength due to a temperature decrease before the molten state resin material Y is brought into contact with the member A in the cavity of the mold, is less likely to occur. When the injection speed is at most the upper limit value in the above range, poor appearance of the members B is less likely to occur.

At the time when the resin material Y is injected into the cavity of the mold, the temperature of the screw and the cylinder portion of the injection molding machine is preferably from 100°C to 500°C, more preferably from 150°C to 400°C, further preferably from 200°C to 380°C. When the above temperature is at least the lower limit value in the above range, the temperature at the time when the molten state resin material Y is in contact with the member A in the cavity of the mold will be high, whereby the adhesive strength of the fluorinated polymer X and the resin material Y will be sufficient. When the above temperature is at most the upper limit value in the above range, deterioration of the resin material Y will be suppressed.

### (Embodiment examples)

According to the method for producing a bonded article of the present invention, it is possible to produce, for example, a connector-attached electric wire in which at an end portion of an electric wire having a coating layer containing a fluorinated polymer X (ETFE-X, etc.), a housing for a connector, containing a resin material Y (a polyamide) is bonded.

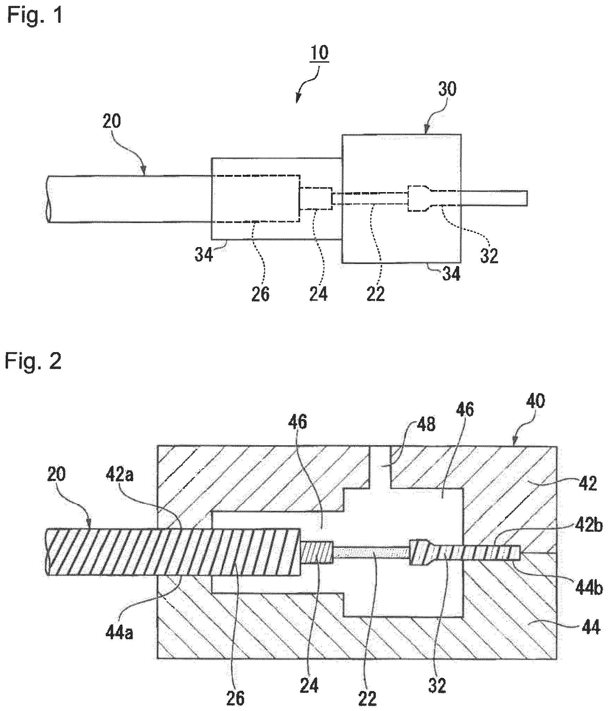

Fig. 1 is a schematic external view showing an example of a bonded article (a connector-attached electric wire). The connector-attached electric wire 10 comprises an electric wire 20 and a connector 30 attached at an end portion of the electric wire 20.

The electric wire 20 comprises a core wire 22, a coating layer 24 covering the core wire 22 and a sheath layer 26 covering the coating layer 24.

The connector 30 has a terminal 32 and a housing 34. Here, the terminal 32 is connected to the core wire 22 protruding from the end portion of the electric wire 20, and the housing 34 covers the sheath layer 26 and the coating layer 24 at the end portion of the electric wire 20, and the core wire 22 protruding from the end portion of the electric wire 20 , as well as the base end side of the terminal 32.

The coating layer 24 and the sheath layer 26 contain a fluorinated polymer X, and correspond to the member A.

The housing 34 contains a resin material Y, and corresponds to the member B.

The core wire 22 and the terminal 32 are made of a metallic material, and corresponds to the member C.

The connector-attached electric wire 10 is produced as follows.

As shown in Fig. 2, in a cavity 46 of a mold 40 consisting of an upper die 42 and a lower die 44, an end portion of an electric wire 20 is inserted through a groove 42a formed in the upper die 42 and a groove 44a formed in the lower die 44. in the cavity 46, the sheath layer 26 and the coating layer 24 at the end portion of the electric wire 20, the core wire 22 protruding from the end portion of the electric wire 20, and the base end side of the terminal 32 to be connected to the core wire 22, are disposed. The forward end side of the terminal 32 is inserted in a groove 42b formed in the upper die 42 and a groove 44b formed in the lower die 44.

In a state where in the cavity 46, the sheath layer 26 and the coating layer 24 at the end portion of the electric wire 20, the core wire 22 protruding from the end portion of the electric wire 20, and the base end side of the terminal 32 to be connected to the core wire 22, are disposed, a molten state resin material Y is injected from the gate 48 into the cavity 46, whereby the molten state resin material Y will be filled into the cavity 46. As the resin material Y filled in the cavity 46 is solidified, a housing 34 will be formed.

In the method for producing a bonded article of the present invention as described above, in a state where at least a portion of the member A containing a fluorinated polymer having an adhesive functional group is disposed in the cavity of a mold for injection molding, the resin material is injected into the cavity, whereby the fluorinated polymer having an adhesive functional group contained in the member A and the resin material will adhere. As a result, the member A containing the fluorinated polymer and the member B formed by solidification of the resin material will be firmly bonded.

### EXAMPLES

In the following, the present invention will be described in more detail with reference to Examples, but the present invention is not limited to these Examples. Ex. 1 to 4 are Examples of the present invention.

### <Measurements, evaluations>

### (Q value)

Using a flow tester (manufactured by Shimadzu Corporation, CFT-100EX), a speed (mm³/sec.) of a fluorinated polymer X flowing out from a nozzle with a diameter of 2.1 mm and a length of 8 mm at a temperature of 220°C under a load of 68.6, was measured as the Q value.

### (Melting point)

Using a differential scanning calorimeter (manufactured by SII, DSC-7020), about 5 mg of a sample was held at 300°C for 10 minutes under a dry air stream, then cooled to 100°C at a cooling rate of 10°C/min. and heated to 300°C at a heating rate of 10°C/min, whereby the temperature corresponding to the maximum value of the crystal melting peak was taken as the melting point.

### (Proportions of the respective units)

The proportions of the respective units in a copolymer were obtained from the melt NMR analysis, the fluorine content analysis and the infrared absorption spectrum analysis.

### (Adhesive strength)

A dumbbell (ISO 527-2-1A) was prepared in which with the center in the length direction being the boundary, one half was made of a fluorinated polymer, and the other half was made of another resin material, and using a tensile testing machine (manufactured by Toyo Seiki Seisaku-sho, Ltd. STROGRAPH), it was subjected to a tensile test at a tensile speed of 200 mm/min, whereby the stress at break (MPa) of the dumbbell was taken as the adhesive strength.

### <Production of fluorinated polymer X>

### (Production Example 1)

A stainless steel polymerization vessel having an internal volume of 1.3 L and equipped with a stirrer and a jacket, was evacuated, then, 822 g CF₃CH₂OCF₂CF₂H, 3.2 g of CH₂=CH(CF₂)₄F and 1.65 g of methanol were charged, and while stirring inside of the polymerization vessel, 350 g of HFP, 118 g of TFE and 2.9 g of ethylene were charged. The temperature of the polymerization vessel was adjusted to 66°C by letting hot water flow in the jacket. The pressure in the polymerization vessel at that time was 1.56 MPaG. After the temperature inside the polymerization vessel was stabilized, 5.4 mL of a solution prepared by dissolving 5 mass% of tert-butyl peroxypivalate in CF₃CH₂OCF₂CF₂H was injected into the polymerization vessel, to initiate polymerization. During the polymerization, so that the pressure in the polymerization vessel becomes constant at 1.56 MPaG, a mixed gas of TFE/ethylene = 54146 in molar ratio, was added. Further, every time when 5 g of the TFE/ethylene mixed gas added during the polymerization was consumed, 2 mL of a solution prepared by dissolving 7.1 mass% of CH₂=CH(CF₂)₄F and 1.3 mass% of itaconic anhydride in CF₃CH₂OCF₂CF₂H, was added. After 347 minutes from the initiation of the reaction, at the time when 70 g of the mixed gas of TFE/ethylene = 54146 in molar ratio was added, the polymerization vessel was cooled to terminate the polymerization.

From the polymerization vessel, the remaining monomer gas was purged to atmospheric pressure; the slurry in the polymerization vessel was transferred to a container having an internal volume of 2L; and water in the same volume as the slurry was added, whereupon, while heating, the polymerization medium and the monomers, and the fluorinated polymer were separated. The obtained fluorinated polymer was dried in an oven at 120°C to obtain white powdery ETFE-1.

Of ETFE-1, the Q value at 220°C was 14 mm³/sec., the melting point was 195°C, and the ratio of the respective units (molar ratio) was TFE units/E units/HFP units/CH₂=CH(CF₂)₄F units/itaconic anhydride units = 49.1/41.6/7.8/1.0/0.5.

### <Production of bonded articles>

### (Ex. 1)

Using an injection molding machine (manufactured by FANUC CORPORATION, α-50C), ETFE-1 was injected into the cavity of a mold corresponding to a dumbbell shape of ISO 527-2-1A, to prepare a dumbbell. The dumbbell was cut at the center in the length direction into halves.

in the injection molding machine, a mold corresponding to the dumbbell shape of ISO 527-2-1A was set; the mold temperature was set at 100°C; and the half of the dumbbell made of ETFE-1 was placed in the cavity of the mold. Three minutes later, a polyamide (manufactured by UBE INDUSTRIES, LTD., Polyamide 6 Grade 1030B) was injected into the cavity of the mold and solidified to obtain a dumbbell, of which a half consists of ETFE-1 and the other half consists of the polyamide. At that time, the temperature of the screw and the cylinder portion of the injection molding machine was set at 250°C; the injection speed was set to be 150 mm/s; the holding pressure was set to be 15 MPa; and the pressure dwell time was set to be 1 second. The adhesive strength at the interface between ETFE-1 and the polyamide in the dumbbell is shown in Table 1.

### (Ex. 2)

A dumbbell was obtained in the same manner as in Ex. 1, except that the temperature of the screw and the cylinder portion at the time of injecting the polyamide was changed to 260°C. The adhesive strength at the interface between ETFE-1 and the polyamide in the dumbbell is shown in Table 1.

### (Ex. 3)

A dumbbell was obtained in the same manner as in Ex. 1, except that the injection speed at the time of injecting the polyamide was changed to 250 mm/s. The adhesive strength at the interface between ETFE-1 and the polyamide in the dumbbell is shown in Table 1.

### (Ex. 4)

A dumbbell was obtained in the same manner as in Ex. 1, except that no holding of the pressure was conducted. The adhesive strength at the interface between ETFE-1 and the polyamide in the dumbbell is shown in Table 1.

**[Table 1]**

| | Member A | Member B | Temperature of screw and cylinder (°C) | Injection speed (mm/s) | Holding pressure (MPa) | Pressure dwell time (sec.) | Adhesive strength (MPa) |
|---|---|---|---|---|---|---|---|
| Ex. 1 | ETFE-1 | Polyamide | 250 | 150 | 15 | 1 | 13 |
| Ex. 2 | ETFE-1 | Polyamide | 260 | 150 | 15 | 1 | 19 |
| Ex. 3 | ETFE-1 | Polyamide | 250 | 250 | 15 | 1 | 19 |
| Ex. 4 | ETFE-1 | Polyamide | 250 | 150 | - | - | 8 |

From the above results, it is evident that in a state where a member A containing a fluorinated polymer X is disposed in the cavity of a mold, by injecting a molten state resin material Y into the cavity of the mold and solidifying it to form a member B, it is possible to obtain a bonded article wherein the member A and the member B are firmly bonded.

The method for producing a bonded article of the present invention is useful for producing a bonded article in which a member containing a fluorinated polymer and another member are bonded.

### REFERENCE SYMBOLS

10: Connector-attached electric wire, 20: electric wire, 22: core wire, 24: coating layer, 26: sheath layer, 30: connector, 32: terminal, 34: housing, 40: mold, 42: upper die, 42a: groove, 42b: groove, 44: lower die, 44a: groove, 44b: groove, 46: cavity, 48: gate.

## Claims

1. A method for producing a bonded article in which a member A containing a fluorinated polymer having an adhesive functional group and a member B containing a resin material, are bonded, **characterized in that** in a state where at least a portion of said member A is disposed in the cavity of a mold for injection molding, said resin material is injected into the cavity and solidified to form said member B, wherein
the adhesive functional group is a carbonyl group-containing group,
the resin material contained in the member B is a polyamide, and
the temperature of the mold is lower by at least 10°C than the melting point of the fluorinated polymer.

2. The method for producing a bonded article according to Claim 1, wherein in a state where at least a portion of said member A and at least a portion of a member C other than said member A and said member B, are disposed in the cavity of the mold, said resin material is injected into the cavity.

3. The method for producing a bonded article according to Claim 1 or 2, wherein the fluorinated polymer has units derived from ethylene and units derived from tetrafluoroethylene.

4. The method for producing a bonded article according to Claim 3, wherein the molar ratio of the units derived from ethylene to the units derived from tetrafluoroethylene is from 25/75 to 80/20.

5. The method for producing a bonded article according to any one of Claims 1 to 4, wherein the melting point of the fluorinated polymer is at most 320°C.

6. The method for producing a bonded article according to any one of Claims 1 to 5, wherein said resin material is a thermoplastic resin or a thermosetting resin.

7. The method for producing a bonded article according to any one of Claims 1 to 6, wherein said resin material has a functional group reactive with said adhesive functional group.

8. The method for producing a bonded article according to any one of Claims 1 to 7, wherein the pressure dwell time after injecting the resin material into the cavity of the mold is from 0.5 to 100 seconds.

9. The method for producing a bonded article according to any one of Claims 1 to 8, wherein the holding pressure after injecting the resin material into the cavity of the mold is from 1 to 50 MPa.

10. The method for producing a bonded article according to any one of Claims 1 to 9, wherein the injection speed at the time of injecting the resin material into the cavity of the mold is from 10 to 500 mm/s.

## Patentansprüche

1. Verfahren zum Herstellen eines verbundenen Gegenstands, in welchem ein Bauteil A, das ein fluoriertes Polymer mit einer haftenden funktionellen Gruppe enthält, und ein Bauteil B, das ein Harzmaterial enthält, verbunden sind, **dadurch gekennzeichnet, dass** in einem Zustand, wo mindestens ein Teil des Bauteils A in dem Hohlraum einer Gussform zum Spritzgießen angeordnet wird, das Harzmaterial in den Hohlraum eingespritzt wird und verfestigt wird, um das Bauteil B zu bilden, wobei
die haftende funktionelle Gruppe eine Carbonylgruppe-enthaltende Gruppe ist,
das Harzmaterial, das in dem Bauteil B enthalten ist, ein Polyamid ist und
die Temperatur der Gussform um mindestens 10 °C geringer ist als der Schmelzpunkt des fluorierten Polymers.

2. Verfahren zum Herstellen eines verbundenen Gegenstands nach Anspruch 1, wobei in einem Zustand, wo mindestens ein Teil des Bauteils A und mindestens ein Teil eines Bauteils C, das verschieden von dem Bauteil A und dem Bauteil B ist, in dem Hohlraum der Gussform angeordnet werden, das Harzmaterial in den Hohlraum eingespritzt wird.

3. Verfahren zum Herstellen eines verbundenen Gegenstands nach Anspruch 1 oder 2, wobei das fluorierte Polymer von Ethylen abgeleitete Einheiten und von Tetrafluorethylen abgeleitete Einheiten aufweist.

4. Verfahren zum Herstellen eines verbundenen Gegenstands nach Anspruch 3, wobei das molare Verhältnis der von Ethylen abgeleiteten Einheiten zu den von Tetrafluorethylen abgeleiteten Einheiten von 25/75 bis 80/20 beträgt.

5. Verfahren zum Herstellen eines verbundenen Gegenstands nach einem der Ansprüche 1 bis 4, wobei der Schmelzpunkt des fluorierten Polymers höchstens 320 °C beträgt.

6. Verfahren zum Herstellen eines verbundenen Gegenstands nach einem der Ansprüche 1 bis 5, wobei das Harzmaterial ein thermoplastisches Harz oder ein wärmehärtbares Harz ist.

7. Verfahren zum Herstellen eines verbundenen Gegenstands nach einem der Ansprüche 1 bis 6, wobei das Harzmaterial eine funktionelle Gruppe aufweist, die reaktiv mit der haftenden funktionellen Gruppe ist.

8. Verfahren zum Herstellen eines verbundenen Gegenstands nach einem der Ansprüche 1 bis 7, wobei die Druckhaltezeit nach Einspritzen des Harzmaterials in den Hohlraum der Gussform von 0,5 bis 100 Sekunden beträgt.

9. Verfahren zum Herstellen eines verbundenen Gegenstands nach einem der Ansprüche 1 bis 8, wobei der Haltedruck nach Einspritzen des Harzmaterials in den Hohlraum der Gussform von 1 bis 50 MPa beträgt.

10. Verfahren zum Herstellen eines verbundenen Gegenstands nach einem der Ansprüche 1 bis 9, wobei die Einspritzgeschwindigkeit zu der Zeit des Einspritzens des Harzmaterials in den Hohlraum der Gussform von 10 bis 500 mm/s beträgt.

## Revendications

1. Procédé de production d'un article assemblé dans lequel un élément A contenant un polymère fluoré comportant un groupe fonctionnel adhésif et un élément B contenant un matériau en résine, sont assemblés, **caractérisé en ce que**, dans un état dans lequel au moins une partie dudit élément A est disposée dans la cavité d'un moule lors du moulage par injection, ledit matériau en résine est injecté dans la cavité et solidifié afin de former ledit élément B, dans lequel le groupe fonctionnel adhésif est un groupe contenant un groupe carbonyle,
le matériau en résine contenu dans l'élément B est un polyamide, et
la température du moule est inférieure d'au moins 10°C au point de fusion du polymère fluoré.

2. Procédé de production d'un article assemblé selon la revendication 1, dans lequel, dans un état dans lequel au moins une partie dudit élément A et au moins une partie d'un élément C autre que ledit élément A et ledit élément B sont disposées dans la cavité du moule, ledit matériau en résine est injecté dans la cavité.

3. Procédé de production d'un article assemblé selon la revendication 1 ou 2, dans lequel le polymère fluoré comporte des unités dérivées de l'éthylène et des unités dérivées du tétrafluoroéthylène.

4. Procédé de production d'un article assemblé selon la revendication 3, dans lequel le rapport molaire des unités dérivées de l'éthylène sur les unités dérivées du tétrafluoroéthylène est compris entre 25/75 et 80/20.

5. Procédé de production d'un article assemblé selon l'une quelconque des revendications 1 à 4, dans lequel le point de fusion du polymère fluoré est inférieur ou égal à 320°C.

6. Procédé de production d'un article assemblé selon l'une quelconque des revendications 1 à 5, dans lequel ledit matériau en résine est une résine thermoplastique ou une résine thermodurcissable.

7. Procédé de production d'un article assemblé selon l'une quelconque des revendications 1 à 6, dans lequel ledit matériau en résine comporte un groupe fonctionnel réactif avec ledit groupe fonctionnel adhésif.

8. Procédé de production d'un article assemblé selon l'une quelconque des revendications 1 à 7, dans lequel le temps de séjour sous pression après injection du matériau en résine dans la cavité du moule est compris entre 0,5 et 100 secondes.

9. Procédé de production d'un article assemblé selon l'une quelconque des revendications 1 à 8, dans lequel la pression de maintien après injection du matériau en résine dans la cavité du moule est comprise entre 1 et 50 MPa.

10. Procédé de production d'un article assemblé selon l'une quelconque des revendications 1 à 9, dans lequel la vitesse d'injection lors de l'injection du matériau en résine dans la cavité du moule est comprise entre 10 et 500 mm/s.
